(19) Europäisches Patentamt
European Patent Office
Office européen des brevets

(11) EP 1 857 506 B1

(12) **EUROPÄISCHE PATENTSCHRIFT**

(45) Veröffentlichungstag und Bekanntmachung des Hinweises auf die Patenterteilung:
**12.07.2017 Patentblatt 2017/28**

(51) Int Cl.:
***C09C 1/24*** *(2006.01)* ***C04B 14/30*** *(2006.01)*
***C09D 7/12*** *(2006.01)* ***C08K 3/22*** *(2006.01)*
***C08K 9/04*** *(2006.01)* ***C04B 103/54*** *(2006.01)*

(21) Anmeldenummer: **07009133.5**

(22) Anmeldetag: **07.05.2007**

(54) **Oxidationsstabile Eisenoxidpigmente, Verfahren zu ihrer Herstellung sowie deren Verwendung**

Oxidation stable iron oxide pigments, method for their production and their use.

Pigment d'oxyde de fer résistant à l'oxydation, méthode de leur fabrication et leur usage.

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.05.2006 DE 102006023244**

(43) Veröffentlichungstag der Anmeldung:
**21.11.2007 Patentblatt 2007/47**

(73) Patentinhaber: **LANXESS Deutschland GmbH**
**50569 Köln (DE)**

(72) Erfinder: **Friedrich, Holger, Dr.**
**47798 Krefeld (DE)**

(56) Entgegenhaltungen:
**EP-A- 1 045 292** **WO-A-2005/060610**
**DE-A1- 2 808 144** **DE-A1- 3 620 978**
**DE-A1- 4 322 886** **DE-A1- 19 614 136**

EP 1 857 506 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft oxidationsstabile Eisenoxidpigmente, die eine Beschichtung aus mindestens einer organischen Substanz aufweisen, deren Herstellung und deren Verwendung.

Eisenoxidpigmente, welche Eisen in der Oxidationsstufe +2 enthalten, stellen im Vergleich zu Eisen(III)-Oxid - $Fe_2O_3$ - thermodynamisch instabile Phasen dar. Sie können in Gegenwart von Luft beziehungsweise Sauerstoff partiell oder vollständig oxidiert werden, zum Beispiel

$$2\ Fe_3O_4 + \tfrac{1}{2}\ O_2 \rightarrow 3\ Fe_2O_3$$

Solche Reaktionen sind beispielsweise bei Eisenoxidschwarz-Pigmenten bekannt, die in ihrer Zusammensetzung und Struktur dem Magnetit entsprechen. Das Pigment büßt durch die Oxidation seine wichtigste Eigenschaft, die Farbe, ein und wird somit unbrauchbar. Die Oxidationsneigung nimmt in dem Maße zu, wie auch die Feinteiligkeit und somit die spezifische Oberfläche der Pigmente zunimmt.

Das gleiche gilt für Mischungen von Eisenoxidschwarz mit anderen Eisenoxid-Farbpigmenten - Eisenoxidrot beziehungsweise Eisenoxidgelb - wie sie für braune Farbtöne hergestellt werden.

Ist es bei den Farbpigmenten der Verlust der koloristischen Eigenschaften, der sie unbrauchbar macht, so ist es bei den Eisen(II)-haltigen Magnetpigmenten der Verlust der magnetischen Eigenschaften, der gleichfalls durch die Oxidation hervorgerufen wird. Gefährdet sind vor allem feinteilige Magnetitpigmente sowie Mischphasen zwischen Magnetit ($Fe_3O_4$) und Maghämit ($\gamma$-$Fe_2O_3$) mit hohem Eisen(II)-Gehalt. Oxidationsempfindlich sind aber auch Mischphasen von Magnetit und/oder Ferrite, wie zum Beispiel Cobaltferrit und solche Magnetpigmente, die aus einem Kern aus $Fe_3O_4$ und $\gamma$-$Fe_2O_3$ und einer diesen Kern umgebenden Hülle aus magnetischen Metalloxiden - insbesondere des Eisens und des Cobalts - zusammengesetzt sind. In der Fachliteratur findet man neben der Bezeichnung Mischphase auch den Ausdruck "Berthollide" für die hier beschriebenen Zusammensetzungen.

Aus der DE 27 44 598 A1 ist es bekannt, die Oxidationsempfindlichkeit feinteiliger ferrimagnetischer Magnetitpartikel durch Behandlung mit heterocyclischen organischen Verbindungen zu vermindern. Diese Behandlung bedingt gegenüber den unbehandelten Pigmenten eine erhebliche Verbesserung, die aber über ein bestimmtes Niveau nicht zu steigern ist. Morpholin, N-(3-Aminopropyl-) Morpholin, N-(2-Hydroxyethyl)-piperazin, 1,2,4-Triazol und 3-Amino-1,2,4-Triazol haben sich als besonders wirkungsvoll erwiesen. Die eingesetzten Heterocyclen werden dabei lediglich physikalisch am Pigment adsorbiert und gehen daher in die wasserlöslichen Bestandteile ein. Hieraus können Unverträglichkeiten in unterschiedlichen Bindemittelsystemen resultieren. Die Behandlung der Magnetitpartikel mit der heterocyclischen organischen Verbindung erfolgt ferner unter einer nichtoxidierenden Atmosphäre, und die Anwesenheit von Luft ist auszuschließen. Daher ist das Verfahren aufwendig.

Die DE 41 39 052 A1 offenbart Eisenoxidpigmente, die zur Erhöhung der Stabilität gegenüber Luftoxidation mit cyclischen Carbonsäurehydraziden der allgemeinen Formel

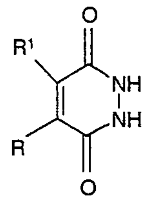

beschichtet werden. Bevorzugt werden "Phthalsäurehydrazid" und "Maleinsäurehydrazid" eingesetzt. Bei allen Verbindungen der oben genannten allgemeinen Formel handelt es sich allerdings bei genauerer Betrachtung lediglich um 3,6-Dihydroxy-substituierte Derivate des Pyridazins, da zu den Verbindungen der oben genannten allgemeinen Formel folgende tautomere Form existiert.

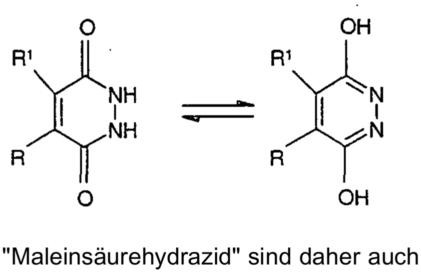

Für "Phthalsäurehydrazid" und "Maleinsäurehydrazid" sind daher auch die Bezeichnungen 1,4-Dihydroxyphthalazin beziehungsweise 3,6-Dihydroxypyridazin gebräuchlich. Insofern handelt es sich bei den in DE 41 39 052 A1 offenbarten cyclischen Carbonsäurehydraziden um einfache stickstoffhaltige Heterocyclen. Diese werden - wie bereits oben erwähnt - lediglich physikalisch am Pigment adsorbiert und gehen daher in die wasserlöslichen Bestandteile ein. Hieraus können Unverträglichkeiten in unterschiedlichen Bindemittelsystemen resultieren.

Die DE 37 26 048 A1 beschreibt eine Beschichtung von Eisenoxidpigmenten mit Derivaten der Benzoesäure, die der allgemeinen Formel

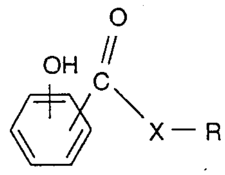

entsprechen, wobei
X = O oder NH und

R = einen gegebenenfalls substituierten linearen oder verzweigten Alkyl- oder Alkylenrest mit 1 bis 30 C-Atomen oder einen gegebenenfalls substituierten Cycloalkylrest mit 5 bis 12 C-Atomen oder einen gegebenenfalls substituierten Arylrest mit 5 bis 10 C-Atomen oder Wasserstoff bedeutet. Besonders bevorzugt sind Salicylsäureester, die aliphatische Alkoholkomponenten mit 2 bis 18 C-Atomen enthalten, zum Beispiel Salicylsäureoctylester oder Salicylsäuredodecylester. Die eingesetzten Derivate der Benzoesäure der allgemeinen Formel werden dabei lediglich physikalisch am Pigment adsorbiert und gehen daher in die wasserlöslichen Bestandteile ein. Hieraus können Unverträglichkeiten in unterschiedlichen Bindemittelsystemen resultieren.

Im Stand der Technik sind auch zahlreiche anorganische Beschichtungen beziehungsweise Beschichtungen aus Mischungen von anorganischen und organischen Substanzen beschrieben, um die Oxidationsstabilität von Eisenoxidpigmenten zu verbessern.

So wird in der DE 32 11 327 A1 die Nachbehandlung mit borenthaltenden Verbindungen beschrieben. Als solche kommen *ortho*-Borsäure, *tetra*-Borsäure, *meta*-Borsäure, glasiges Dibortrioxid, kristallines Dibortrioxid, Borsäuretrimethylester, Borsäuretriethylester, Komplexe von Borsäure mit Polyhydroxyverbindungen und Salze von Borsäuren, wie zum Beispiel $NH_4B_5O_8 * 4\ H_2O$, $Na_2B_4O_6 * 10\ H_2O$, $CaB_3O_5OH * 2\ H_2O$ oder $NaBO_2$ in Betracht. Auch Bor/Stickstoff-Verbindungen oder Bor-Schwefelverbindungen werden genannt. Bevorzugt werden als Borverbindungen Boroxide, Borsäuren und/oder Salze von Borsäuren, besonders bevorzugt *ortho*-Borsäure und/oder Dibortrioxid eingesetzt. In den offenbarten Beispielen wird pulverisierte *ortho*-Borsäure und pulverisiertes Dibortrioxid zugesetzt. Die mit Borsäure stabilisierten Pigmente weisen eine vergleichbare Oxidationsstabilität wie die mit heterocyclischen Verbindungen beschichteten Pigmente, bei gleichzeitiger Verringerung der wasserlöslichen Anteile, auf.

Die DE 43 22 886 A1 offenbart Eisenoxidpigmente, die mit Oxiden oder Hydroxiden des Bors, Aluminiums und/oder Siliziums sowie mit aromatischen Carbonsäuren der allgemeinen Formel

$$Ar\text{-}(COOX)_n$$

beschichtet sind, wobei Ar für einen gegebenenfalls mit Halogen, $NH_2$, OH, NHR, $NR_2$, OR oder R substituierten Aromaten steht, in dem R einen linearen oder verzweigten Alkylrest mit 1 bis 30 C-Atomen oder einen gegebenenfalls substituierten Arylrest mit 6 bis 10 C-Atomen darstellt und X für Wasserstoff, Alkali, $NR^1_4$ mit $R^1$ = H, Alkyl und/oder Aryl, ½ Erdalkali, ⅓ Al oder ⅓ Fe steht und n für eine ganze Zahl von 1 bis 10 steht. In den offenbarten Beispielen werden Mischungen von Borsäure und Benzoesäure beziehungsweise von Borsäure und 4-Hydroxybenzoesäure zugesetzt.

Eine Expertenkommission der europäischen Union hat vorgeschlagen, Borsäure, Borate der *ortho*-Borsäure, wie zum Beispiel $Na_3BO_3$, beziehungsweise der *tetra*-Borsäure, wie zum Beispiel $Na_2B_4O_6 * 10\ H_2O$ oder $Na_2B_4O_6 * 5\ H_2O$ sowie Dibortrioxid als reproduktionstoxisch (fortpflanzungsgefährdend) der Kategorie 2 (Stoffe, die aufgrund eindeutiger tierexperimenteller Befunde oder sonstiger relevanter Informationen als fruchtschädigend beziehungsweise als beeinträchtigend für die Fortpflanzungsfähigkeit beim Menschen angesehen werden sollten) und als "giftig" (Gefahrenbezeichnung T) einzustufen (siehe Protokoll einer Expertenbefragung bei der EU "Commission Working Group of Specialised Experts in the Field of Reprotoxicity", Ispra, 05.-06. Oktober 2004 - Protokolldatum vom 22. November 2004). Am 08. September 2005 hat das EU Technical Committee "Classincation and Labeling" die oben genannten Verbindungen abschließend behandelt. Mit Mehrheitsbeschluss wurde der Empfehlung der Expertenkommission gefolgt und für diese Stoffgruppen die Klassifizierung mit "reproduktionstoxisch Kategorie 2" festgeschrieben. Es gelten die R-Sätze 60 (kann die Fortpflanzungsfähigkeit beeinträchtigen) und 61 (kann das Kind im Mutterleib schädigen) sowie die Gefahrenbezeichung T ("giftig") (siehe Protokoll der Sitzung des EU Technical Committee "Classification and Labeling", Arona, 08. September 2005). Der Umgang mit diesen Substanzen, beziehungsweise deren Einsatz im Produktionsprozess zur Stabilisierung der Eisen(II)-haltigen Eisenoxidpigmente, erfordert damit entsprechende Maßnahmen zum Schutz der Mitarbeiter und der Umwelt. Aus diesem Grunde ist der Ersatz der oben genannten Verbindungen wünschenswert.

Aufgabe der vorliegenden Erfindung war es daher, oxidationsstabile Eisen(II)-haltige Eisenoxidpigmente bereit zu stellen, die eine mindestens genau so gute Oxidationsstabilität wie borhaltige Eisenoxidpigmente aufweisen, die aber ohne den Einsatz anorganischer Substanzen in einem Schritt unter Verwendung von handelsüblichen organischen Substanzen hergestellt werden können.

Diese Aufgabe wurde gelöst durch Eisenoxidpigmente mit einem Eisen(II)-Gehalt von mindestens 5 Gew.-%, gerechnet als FeO, die eine organische Beschichtung aufweisen, gemäß Anspruch 1. Die Oxidationsstabilität wird gemäß dem in den Beispielen offenbarten Oxidationsstabilitäts-Test festgestellt.

Die Eisenoxidpigmente weisen vorzugsweise eine Oxidationsstabilität von $\geq$ 20°C gegenüber dem nicht beschichteten Eisenoxidpigment auf.

Unter "aliphatisch" werden im Kontext der Erfindung Verbindungen verstanden, deren C-Atome - im Gegensatz zu den isocyclischen Verbindungen, bei denen die C-Atome Ringe bilden - in Ketten angeordnet sind. Damit werden aliphatische Verbindungen den acyclischen Verbindungen gleichgesetzt, deren Untergruppen die Alkane, Alkine oder Alkene mit unverzweigten oder verzweigten Ketten sind.

Unter "alicyclisch" werden im Kontext der Erfindung - wie schon die durch Zusammenziehung der beiden Begriffe "aliphatisch" und "cyclisch" gebildete Bezeichnung andeutet - Verbindungen verstanden, deren C-Atome in Ringen angeordnet sind. Alicyclisch steht daher auch als Synonym für cycloaliphatisch. Alicyclische Verbindungen gehören somit zur Gruppe der isocyclischen Verbindungen und umfassen also Cycloalkane, Cycloalkene und Cycloalkine. Aromatische Verbindungen und heterocyclische Verbindungen sowie die gesättigten Vertreter der heterocyclischen Verbindungen gelten nicht als alicyclisch im Sinne dieser Erfindung.

Unter "aromatisch" werden im Kontext der Erfindung lediglich carbocyclische aromatische Verbindungen verstanden, bei denen die Ringglieder nur aus C-Atomen bestehen. Dazu gehören unter anderem Benzol sowie Verbindungen, die mehrere kondensierte Benzolringe enthalten wie beispielsweise Naphthalin, Anthracen oder Phenanthren. Heterocyclen, bei denen nicht ausschließlich C-Atome im Ring beziehungsweise in Ringen angeordnet sind, gelten nicht als aromatisch in Sinne dieser Erfindung.

Die alicyclischen und aromatischen Verbindungen im Sinne dieser Erfindung können auch unter dem Oberbegriff "Carbocyclen" zusammengefasst werden, da die Ringglieder in beiden Fällen nur aus C-Atomen bestehen.

Unter der maximal möglichen Oxidationszahl des Elementes X wird im Kontext der Erfindung die Ladung des entsprechenden Elements verstanden, welches ein Atom des Elements X haben würde, wenn in seiner sauerstoffreichsten Verbindung alle Elektronen der von dem Atom X ausgehenden Bindungen dem elektronegativeren Sauerstoff zugeordnet werden. Eine Übersicht über die maximal mögliche Oxidationszahl der Elemente X zeigt auch Tabelle 1. Die tatsächlich vorliegende Oxidationszahl des Elementes X in der Verbindung der allgemeinen Formel (I) kann von dieser maximal möglichen Oxidationszahl abweichen.

Charakteristisch für die organischen Verbindungen der allgemeinen Formel (I) ist, dass sie aus einem zentralen X-Atom bestehen, an das sowohl die Sauerstoffatome, als auch die Substituenten $R^3$, $(OR^2)$ und $R^1$ direkt gebunden sind. Dabei ist der beziehungsweise sind die Substituenten $OR^2$ jeweils über eine X-O-Bindung an das zentrale X-Atom gebunden.

X steht für P (Phosphor) oder S (Schwefel).

$R^2$ oder $R^1$ steht vorzugsweise für einen gesättigten linearen oder verzweigten aliphatischen Rest mit 1 bis 15 C-Atomen, bevorzugt mit 1 bis 8 C-Atomen.

$R^2$ oder $R^1$ steht vorzugsweise für einen aromatischen Rest mit 6 bis 14 C-Atomen, welcher sich von Benzol, Naphthalin oder Anthracen ableitet.

$R^3$ steht für Cl, $NH_2$ oder OM, wobei M Wasserstoff eine Ammoniumverbindung oder ein Alkalimetall, insbesondere Natrium oder Kalium, ist.

Die organische Beschichtung besteht aus mindestens einer Verbindung der allgemeinen Formel (I), wobei der Index a der maximal möglichen Oxidationszahl des Elements X abzüglich 4 entspricht. Der Index a ist somit stets eine ganze Zahl. Tabelle 1 gibt eine Übersicht über den Zusammenhang zwischen dem Element X, dessen maximal möglicher Oxidationszahl und dem daraus resultierenden Index a.

**Tabelle 1**

| Element X | Maximal mögliche Oxidationszahl von X | Index a |
|---|---|---|
| Si (Silicium) | +4 | 0 |
| Sn (Zinn) | +4 | 0 |
| Ti (Titan) | +4 | 0 |

(fortgesetzt)

| Element X | Maximal mögliche Oxidationszahl von X | Index a |
|---|---|---|
| Zr (Zirconium) | +4 | 0 |
| P (Phosphor) | +5 | 1 |
| S (Schwefel) | +6 | 2 |

Für den Fall b = 0 verfügen die Verbindungen der allgemeinen Formel (I) über keinen Substituenten $R^3$. Für den Fall b ≥ 1 verfügen die Verbindungen der allgemeinen Formel (I) auf jeden Fall über mindestens einen Substituenten $R^3$ am X-Atom. Dieser Substituent kann direkt als ionische Gruppe in Form von $O^-M^+$ vorliegen oder auch als Br oder Cl. Diese Substituenten können mit Wasser oder Luftfeuchtigkeit hydrolysieren und zu einem Substituenten $R^3$ = OH reagieren. So hydrolysieren beispielsweise für den Fall X = Si und $R^3$ = Cl, die Si-Cl-Bindung(en) unter Einwirkung von Feuchtigkeit zu Si-OH. Durch die Bedingungen b < (8 abzüglich der maximal möglichen Oxidationszahl des Elements X) ist sichergestellt, dass mindestens immer noch ein Substituent ($OR^2$) oder $R^1$ an das X-Atom gebunden ist. Dadurch ist sichergestellt, dass die Beschichtung nicht mit anorganischen Verbindungen wie beispielsweise $Si(OM)_4$, $SO_2(OM)_2$, $PO(OM)_3$ und so weiter erfolgt, wobei M Wasserstoff, eine Ammoniumverbindung oder ein Alkalimetall, beispielsweise Natrium oder Kalium, ist.

Tabelle 2 gibt eine Übersicht über die Indices c und d, wie sie in Abhängigkeit von der maximal möglichen Oxidationszahl des Elements X und vom Index b gewählt werden können. Die genannten Beispiele sollen zur Erläuterung dienen. Aus systematischen Gründen und aus Gründen der Übersichtlichkeit sind bei den Beispielen in Tabelle 2 auch die Indices angegeben, die eins sind, auch wenn dies aus chemischer Sicht nicht erforderlich ist.

Die organischen Verbindungen der allgemeinen Formel (I) enthalten vorzugsweise noch Wasser und werden in Form ihrer Hydrate eingesetzt.

Als organische Verbindungen werden vorzugsweise Benzolsulfonsäure und/oder p-Toluolsulfonsäure jeweils in Form der freien Säure, als Säureamid oder als Alkalimetallsalz eingesetzt.

Die organischen Verbindungen der allgemeinen Formel (I) liegen vorzugsweise in einer Menge von 0.1 bis 10 Gew.-%, bevorzugt von 0.2 bis 3 Gew.-%, im beschichteten Pigment vor.

Bei den üblichen Eisenoxidschwarz-Pigmenten mit einem Eisen(II)-Gehalt zwischen 17 und 28 Gew.-%, gerechnet als FeO, und spezifischen Oberflächen von unter 23 $m^2/g$, gemessen mit Hilfe der Stickstoff-Ein-Punkt-Adsorptionsmethode nach BET (DIN 66131/ISO 9277) liegen vorzugsweise die organischen Verbindungen der allgemeinen Formel (I) in einer Menge von 0.1 bis 10 Gew.-%, bevorzugt von 0.2 bis 5 Gew.-%, besonders bevorzugt von 0.2 bis 3 Gew.-%, im beschichteten Pigment vor.

Die zur magnetischen Signalspeicherung verwendeten Pigmente sind feinteiliger als die Eisenoxidschwarz-Pigmente (BET-Oberflächen - bestimmt nach der Stickstoff-Ein-Punkt-Adsorptionsmethode - größer als 23 $m^2/g$) und erfordern bei gleich hohen Eisen(II)-Gehalten entsprechend ihrer spezifischen Oberfläche, die ohne weiteres 40 $m^2/g$ überschreiten kann, größere Zusatzmengen der organischen Verbindungen der allgemeinen Formel (I).

Ist der Eisen(II)-Gehalt niedriger, wie es beispielsweise bei den oben beschriebenen, mit magnetischen Metalloxiden umhüllten Eisenoxid-Magnetpigmenten der Fall sein kann, so kann die Zusatzmenge entsprechend vermindert werden. Die im jeweiligen Einzelfall zur Erreichung der gewünschten Oxidationsstabilität notwendige Behandlungsmenge ist im übrigen für den Fachmann mit Hilfe einiger Testversuche gemäß dem offenbarten Oxidationsstabilitäts-Test ohne Schwierigkeiten feststellbar.

Die Eisenoxidpigmente weisen vorzugsweise einen Restfeuchtegehalt von < 5 Gew.-%, bevorzugt von < 3.5 Gew.-% auf. Dieser kann gegebenenfalls durch eine Nachtrocknung erreicht werden.

**Tabelle 2**

| Maximal mögliche Oxidationszahl von X | 8 abzüglich der maximal möglichen Oxidationszahl von X | Resultierender Index a | Mögliche Optionen für den Index b | Mögliche Optionen für die Indices c und d | Beispiele |
|---|---|---|---|---|---|
| | | | | c = 0 und d = 4 oder<br>c = 1 und d = 3 oder | $XR^1_4$<br>$X(OR^2)_1R^1_3$ |

(fortgesetzt)

| Maximal mögliche Oxidationszahl von X | 8 abzüglich der maximal möglichen Oxidationszahl von X | Resultierender Index a | Mögliche Optionen für den Index b | Mögliche Optionen für die Indices c und d | Beispiele |
|---|---|---|---|---|---|
| +4<br>für X = Si, Sn, Ti, Zr | 4 | 0 | 0 | c = 2 und d = 2 oder<br>c = 3 und d = 1 oder<br>c = 4 und d = 0 | $X(OR^2)_2R^1_2$<br>$X(OR^2)_3R^1_1$<br>$X(OR^2)_4$ |
| | | | 1 | c = 0 und d = 3 oder<br>c = 1 und d = 2 oder<br>c = 2 und d = 1 oder<br>c = 3 und d = 0 | $XR^3_1R^1_3$<br>$XR^3_1(OR^2)_1R^1_2$<br>$XR^3_1(OR^2)_2R^1_1$<br>$XR^3_1(OR^2)_3$ |
| | | | 2 | c = 0 und d = 2 oder<br>c = 1 und d = 1 oder<br>c = 2 und d = 0 | $XR^3_2R^1_2$<br>$XR^3_2(OR^2)_1R^1_1$<br>$XR^3_2(OR^2)_2$ |
| | | | 3 | c = 1 und d = 0 oder<br>c = 0 und d = 1 | $XR^3_3(OR^2)_1$<br>$XR^3_3R^1_1$ |
| | | | 4<br>nicht möglich, da die Bedingung b < (8 abzüglich der maximal möglichen Oxidationszahl des Elements X) nicht erfüllt ist | keine | keine |
| +5 | 3 | 1 | 0 | c = 0 und d = 3 oder<br>c = 1 und d = 2 oder<br>c = 2 und d = 1 oder<br>c = 3 und d = 0 | $XO_1R^1_3$<br>$XO_1(OR^2)_1R^1_2$<br>$XO_1(OR^2)_2R^1_1$<br>$XO_1(OR^2)_3$ |
| | | | 1 | c = 0 und d = 2 oder<br>c = 1 und d = 1 oder<br>c = 2 und d = 0 | $XO_1R^3_1R^1_2$<br>$XO_1R^3_1(OR^2)_1R^1_1$<br>$XO_1R^3_1(OR^2)_2$ |

(fortgesetzt)

| Maximal mögliche Oxidationszahl von X | 8 abzüglich der maximal möglichen Oxidationszahl von X | Resultierender Index a | Mögliche Optionen für den Index b | Mögliche Optionen für die Indices c und d | Beispiele |
|---|---|---|---|---|---|
| für X= P | | | 2 | c = 1 und d = 0 oder<br>c = 0 und d =1 | $XO_1R^3{}_2(OR^2)_1$<br>$XO_1R^3{}_2R^1{}_1$ |
| | | | 3<br>nicht möglich, da die Bedingung b < (8 abzüglich der maximal möglichen Oxidationszahl des Elements X) nicht erfüllt ist | keine | keine |
| +6<br>für X = S | 2 | 2 | 0 | c = 0 und d = 2 oder<br>c = 1 und d = 1 oder<br>c = 2 und d = 0 | $XO_2R^1{}_2$<br>$XO_2(OR^2)_1R^1{}_1$<br>$XO_2(OR^2)_2$ |
| | | | 1 | c = 1 und d = 0 oder<br>c = 0 und d = 1 | $XO_2R^3{}_1(OR^2)_1$<br>$XO_2R^3{}_1R^1{}_1$ |
| | | | 2<br>nicht möglich, da die Bedingung b < (8 abzüglich der maximal möglichen Oxidationszahl des Elements X) nicht erfüllt ist | keine | keine |

Die erfindungsgemäßen thermisch stabilen Eisenoxidpigmente liegen entweder als Pulver oder in Granulatform vor. Unter "Granulat" wird im Kontext der Erfindung jedes Material verstanden, dessen mittlere Korngröße im Vergleich mit den Ausgangsmaterialien durch einen Behandlungsschritt vergrößert worden ist. "Granulat" umfasst daher nicht nur Sprühgranulate und Kompaktierungsgranulate, sondern auch zum Beispiel Produkte einer Nass- oder Feuchtbehandlung mit anschließender Zerkleinerung und Produkte trockener oder im wesentlichen trockener Verarbeitungsschritte, zum Beispiel trocken hergestellte Granulate, Briketts und dergleichen. Bei einem Granulat weisen mindestens 85% Partikel eine Teilchengröße im Bereich von 60 $\mu$m bis 3000 $\mu$m, bevorzugt von 80 $\mu$m bis 1500 $\mu$m, auf.

Die Erfindung betrifft auch ein Verfahren zur Herstellung von Eisenoxidpigmenten, dadurch gekennzeichnet, dass Eisenoxidpigmente mit einem Fe(II)-Gehalt von mindestens 5 Gew.-%, gerechnet als FeO, mit mindestens einer Verbindung der allgemeinen Formel (I) gemischt und die Mischung gegebenenfalls getrocknet und/oder gemahlen wird, wobei die erhaltenen Eisenoxidpigmente eine Oxidationsstabilität gemäß dem Oxidationsstabilitäts-Test von $\geq$ 10°C gegenüber dem nicht beschichteten Eisenoxidpigment aufweisen. Die Herstellung der erfindungsgemäßen Eisenoxidpigmente kann entweder ausgehend vom trockenen Pigment oder auch in der Nassphase (Suspension oder Paste) erfolgen. Eisenoxidpigmente mit einem Fe(II)-Gehalt von mindestens 5 Gew.-%, gerechnet als FeO, werden vorzugsweise in einer Suspension oder Paste mit mindestens einer Verbindung der allgemeinen Formel (I) gemischt und die Mischung getrocknet und gegebenenfalls gemahlen, wobei die erhaltenen Eisenoxidpigmente eine Oxidationsstabilität

gemäß dem Oxidationsstabilitäts-Test von ≥ 10°C gegenüber dem nicht beschichteten Eisenoxidpigment aufweisen.

Die Pigmentsuspension ist vorzugsweise eine Suspension oder Paste aus dem Pigmentherstellungsprozess.

Die Pigmentsuspension ist vorzugsweise eine erneute Dispersion von agglomerierten Partikeln.

Die Eisenoxidpigmente werden vorzugsweise abschließend einer Temperaturbehandlung bei 200°C bis 800°C in einer nicht- oder schwach oxidierenden Atmosphäre ausgesetzt.

Bei den zu stabilisierenden Eisenoxidpigmenten mit einem Eisen(II)-Gehalt von mindestens 5 Gew.-%, gerechnet als FeO, kann es sich um Farbpigmente wie Eisenoxidschwarz und/oder Eisenoxidbraun handeln, es können aber auch magnetische Pigmente wie Magnetit oder Mischphasen von Magnetit mit Maghämit und/oder Ferriten oder mit magnetischen Metalloxiden umhüllte Magnetite beziehungsweise Eisenoxide mit einem Oxidationszustand zwischen Magnetit und Maghämit sein.

Die Herstellung Eisen(II)-haltiger Eisenoxidpigmente ist in der Literatur beschrieben. Sie sind durch viele Verfahren zugänglich. Eisenoxidschwarz-Pigmente werden im technischen Maßstab hauptsächlich nach zwei Verfahren hergestellt (Ullmann's Encyclopedia of Industrial Chemistry, 5. Auflage, Band A20, Seite 297, VCH Verlagsgesellschaft mbH, Weinheim 1992): dem Fällverfahren, bei dem Eisen(II)-salzlösungen unter Einleiten von Luft bei circa 90°C in der Nähe des Neutralpunktes mit Alkalien ausgefällt werden, bis das gewünschte Fe(III)/Fe(II)-Verhältnis erreicht ist, und dem Laux-Verfahren, bei dem Nitrobenzol mit metallischem Eisen zu Anilin reduziert wird und welches so gesteuert werden kann, dass farbstarke Eisenoxidschwarz-Pigmente entstehen.

Je nach Herstellungsverfahren und Reinheit der verwendeten Rohstoffe können Eisenoxidschwarz-Pigmente in wechselnden Mengen, gewöhnlich bis zu 5 Gew.-%, Nebenbestandteile wie zum Beispiel $SiO_2$ oder $Al_2O_3$ enthalten. Normalerweise liegt auch das Fe(III)/Fe(II)-Verhältnis über dem theoretischen Zahlenwert von 2.

Eisen(II)-haltige Eisenoxidbraun-Pigmente werden zum weitaus größten Teil durch Mischen von Eisenoxidgelb und/oder Eisenoxidrot mit Eisenoxidschwarz hergestellt (Ullmann's Encyclopedia of Industrial Chemistry, siehe oben).

Zur Herstellung Eisen(II)-haltiger Eisenoxid-Magnetpigmente (Ullmann's Encyclopedia of Industrial Chemistry, 5. Auflage, Band A20, Seite 330, VCH Verlagsgesellschaft mbH, Weinheim 1992) geht man meist von $\alpha$-FeOOH oder $\gamma$-FeOOH aus, trocknet, entwässert und reduziert bei 350°C bis 600°C mit Wasserstoff zum $Fe_3O_4$, Mischphasen aus Magnetit und Maghämit können durch partielle Oxidation der Magnetpigmente unter schonenden Bedingungen erhalten werden. Mischphasenpigmente ("Berthollide") von Magnetit mit Maghämit und/oder Ferriten werden üblicherweise hergestellt, indem man Ferrite bildende Metalle, wie zum Beispiel Zn, Mn, Co, Ni, Ca, Mg, Ba, Cu oder Cd als Oxide beziehungsweise Hydroxide bei der Herstellung der FeOOH-Vorprodukte mitfällt beziehungsweise auf fertige FeOOH-Pigmente aufbringt und diese konvertiert. Auch diejenigen speziellen Magnetpigmente, die durch Aufbringen einer Beschichtung aus magnetischen Metalloxiden, insbesondere des Eisens und des Cobalts, auf einen Kern aus $Fe_3O_4$ oder einem Eisenoxid mit einem Oxidationszustand zwischen $Fe_3O_4$ und $\gamma$-$Fe_2O_3$ hergestellt werden, können geschützt werden.

Nach dem ersten erfindungsgemäßen Verfahren werden die in an sich bekannter Weise hergestellten Eisen(II)-haltigen Eisenoxidpigmente mit mindestens einer organischen Verbindung der allgemeinen Formel (I) gemischt. Die organischen Verbindungen werden zweckmäßigerweise zuvor in einen feinteiligen Zustand gebracht. Sie können aber auch in Form einer Lösung oder Suspension in wässrigem und/oder organischem Medium zugemischt werden. Zum Mischen können gängige technische Apparate verwendet werden, wie zum Beispiel pneumatisch arbeitende Mischer, Schaufelmischer, Schneckenmischer, Trommelmischer oder Konusmischer. Das Mischen kann bei Raumtemperatur oder aber auch bei höheren Temperaturen als Raumtemperatur erfolgen. Man wird im allgemeinen in Gegenwart von Luft arbeiten, jedoch kann bei Anwendung höherer Temperaturen die Verwendung von Inertgasen, wie zum Beispiel Stickstoff, von Vorteil sein. Werden nur kleine Mengen einer oder mehrerer organischer Verbindungen der allgemeinen Formel (I) mit großen Mengen Pigment vermischt, so kann die Herstellung einer Vormischung vorteilhaft sein. Die erhaltene Mischung wird dann gegebenenfalls gemahlen. Hierzu sind Mahlaggregate unterschiedlicher Bauart geeignet, wie zum Beispiel Walzenmühlen, Kollergänge, Pendelmühlen, Hammermühlen, Stiftmühlen, Turbomühlen, Kugelmühlen oder Strahlmühlen. Die Mahlung kann bei Raumtemperatur oder höheren Temperaturen als Raumtemperatur, gegebenenfalls unter Inertgasen, wie zum Beispiel Stickstoff durchgeführt werden. Gegebenenfalls wird anschließend bei Temperaturen bis zu 800°C in inerter oder nur geringe Mengen Sauerstoff enthaltender Atmosphäre getempert.

Nach dem zweiten erfindungsgemäßen Verfahren werden die in an sich bekannter Weise hergestellten Eisen(II)-haltigen Eisenoxidpigmente zunächst in Suspension oder Paste mit mindestens einer organischen Verbindung der allgemeinen Formel (I) gemischt. Der Zusatz der organischen Verbindungen in der Nassphase ist vorteilhaft, da in der Suspension die Zugabe und das Untermischen der organischen Verbindungen der allgemeinen Formel (I) problemlos möglich ist. Als Suspensionsmedium wird man im allgemeinen Wasser verwenden, jedoch ist prinzipiell auch der Einsatz von wässrig/organischen oder rein organischen Medien möglich. Die Pigmentsuspension oder Paste ist vorzugsweise eine Suspension aus dem Pigmentherstellungsprozess. Die organischen Verbindungen der allgemeinen Formel (I) können zu einem beliebigen Zeitpunkt vor, während oder nach der Pigmentherstellung der Suspension zugesetzt werden. Die Pigmentsuspension kann aber auch eine erneute Dispersion von bereits agglomerierten Partikeln sein, um ausgehend von Pigmentpulver, gezielt eine Pigmentsuspension für die Behandlung mit mindestens einer organischen Verbindung der allgemeinen Formel (I) herzustellen. Die Behandlung kann in allen Fällen bei Raumtemperatur oder höherer Temperatur, gegebenenfalls unter Inertgasatmosphäre, vorgenommen werden. Die Behandlungsdauer beträgt vorzugsweise eine Minute bis einige Stunden. Das behandelte Pigment wird in einem weiteren Verfahrensschritt getrocknet. Für den Trocknungsschritt steht dem Fachmann eine Reihe von Aggregaten zur Verfügung. Es seien an dieser Stelle nur Kanal-, Band-, Etagen-, Walzen-, Trommel-, Röhren-, Schaufeltrockner, oder auch diskontinuierlich arbeitende Kammer-Horden-Trockner erwähnt. Die Trocknung erfolgt vorzugsweise durch Sprühtrocknung oder Wirbelschichttrocknung. Vorzugsweise werden Sprühtrockner (Zerstäubungstrockner) eingesetzt, die mit Sprühscheiben oder -düsen im Gleichoder Gegenstromverfahren arbeiten. Je nach gewähltem Trocknungsaggregat kann es erforderlich sein, dass sich noch ein Mahlschritt anschließt. Das beschichtete, getrocknete Pigment wird dann wie beim ersten Verfahren gegebenenfalls gemahlen und gegebenenfalls anschließend bei Temperaturen bis zu 800°C in inerter oder nur geringe Mengen Sauerstoff enthaltender Atmosphäre getempert.

Ein Vorteil der erfindungsgemäßen Herstellungsverfahren ist, dass das Auffällen einer Nachbehandlungssubstanz oder gar ein mehrstufiges Syntheseverfahren für die Nachbehandlung bei der Herstellung der erfindungsgemäßen oxidationsstabilen Eisenoxidpigmente nicht erforderlich ist.

Oxidationsstabile Eisen(II)-haltige Eisenoxidpigmente, welche Mischungen verschiedener Eisenoxid-Farbpigmente sind, werden aus Kostengründen zweckmäßigerweise so hergestellt, dass lediglich diejenigen Mischungspartner, welche zweiwertiges Eisen enthalten, nach einem der beiden erfindungsgemäßen Verfahren vor Oxidation geschützt werden, und erst dann die Mischung mit den anderen Eisenoxidpigmenten durchgeführt wird. Es ist aber selbstverständlich auch möglich, die Mischung aus Eisen(II)-haltigen Eisenoxid-Farbpigmenten und Eisen(II)-freien Eisenoxid-Farbpigmenten als Ganzes einem der beiden erfindungsgemäßen Verfahren zu unterziehen.

Es ist nicht erfindungswesentlich, ob die erfindungsgemäßen oxidationsstabilen Eisenoxidpigmente in Pulverform oder in granulierter Form vorliegen. Wenn die oxidationsstabilen Eisenoxidpigmente in granulierter Form hergestellt werden sollen, so eignen sich dafür die gängigen Verfahren. Nach dem Stand der Technik kommen als Herstellungsverfahren für Pigmentgranulate Sprühgranulation (Sprühtrocknung über Scheibe oder Düse) im Gleich- oder Gegenstromverfahren, Aufbaugranulation (Mischer, Wirbelschichtgranulator, Teller beziehungsweise Trommel), Kompaktier- oder Extrusionsverfahren in Frage. Natürlich sind auch Kombinationen aus diesen Granulationsverfahren denkbar. Die Wahl des geeigneten Granulationsverfahrens hängt unter anderem davon ab, ob die organische Verbindung der allgemeinen Formel (I) bereits in der Nassphase (Suspension oder Paste) zugesetzt wird oder zum bereits getrockneten Pigment. Im ersten Fall bieten sich die Sprühtrocknungs- oder Extrusionsverfahren an, im zweiten Fall das Kompaktierverfahren. Oxidationsstabile Eisenoxidpigmente werden vorzugsweise in trockenem und gegebenenfalls gemahlenem Zustand anschließend noch einem Granulationsprozess unterworfen.

Die Erfindung betrifft auch die Verwendung der Eisenoxidpigmente zur Einfärbung von kalk- und/oder zementgebundenen Baustoffen, zur Einfärbung von Kunststoffen, Lacken, Dispersionsfarben und zur Herstellung von magnetischen Aufzeichnungsträgern und Tonern.

Die kalk- und/oder zementgebundenen Baustoffe sind vorzugsweise Beton, Zementmörtel, Putz und/oder Kalksandstein. Die Eisenoxidpigmente werden mit den Baustoffen in einer Menge von 0,1 bis 10 Gew.-% bezogen auf Zement vermischt. Sie können aber auch zuerst in Wasser suspendiert und anschließend mit den Baustoffen vermischt werden.

Die Eisenoxidpigmente können vorteilhaft zur Fertigung magnetischer Aufzeichnungsmaterialien jeglicher Art verwendet werden, wie zum Beispiel Audio- und Videobänder, Instrumentationsbänder, Computerbänder, Magnetkarten, flexible Magnetscheiben, starre Magnetplatten oder Trommelspeicher.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutert, ohne dass dadurch eine Einschränkung der Erfindung bewirkt werden soll. Die gemachten Mengenangaben der jeweiligen Zusätze in Gew.-% beziehen sich jeweils auf das eingesetzte Pigment.

## I. Beschreibung der verwendeten Messmethoden

### I.1 Oxidationsstabilitäts-Test

Die Prüfung der Oxidationsstabilität erfolgte in Anlehnung an ein Testverfahren für Stoffe die einer oxidativen Selbsterhitzung unterliegen, das in den "Empfehlungen für die Beförderung gefährlicher Güter - Handbuch über Prüfungen und Kriterien" der Vereinten Nationen in der dritten überarbeiteten Ausgabe der deutschen Übersetzung von der Bundesanstalt für Materialforschung und -prüfung in Teil III, Kapital 33.3.1.6.1 bis 33.3.1.6.3, Seite 338 beschrieben ist.

Ofen: Ein Ofen mit Warmluftzirkulation und einem Innenvolumen von mehr als 91, der so eingerichtet ist, dass er die eingestellte Solltemperatur im Innern auf ± 2°C genau zu halten vermag.

Probenbehälter: Kubischer Probenbehälter von 10 cm Kantenlänge aus rostfreiem Stahldrahtnetz von 350 mesh Maschenweite mit offener Oberseite. Dieser Probenbehälter muss in einen kubischen Schutzbehälter von 10.8 cm Kantenlänge aus rostfreiem Stahldraht von 8 mesh Maschenweite eingesetzt werden. Der Probenbehälter besitzt an den oberen Ecken kleine Haltestangen, damit er frei und mittig im Schutzbehälter aufgehängt werden kann. Der Schutzbehälter steht auf Stelzen, damit er in der Mitte des Trockenschrankes aufgestellt werden kann.

Temperaturmessung: Die Temperaturerfassung in der Probe erfolgt mittels NiCrNi-Mantelthermoelement mit 1.5 mm Durchmesser. Dieses Thermoelement ist in der Mitte der Probe anzuordnen. Die Temperaturerfassung und Regelung des Ofens erfolgt über ein Platin-Widerstandthermometer PT 100, das bis in die Ofenkammer hinein ragt und zwischen Probenbehälter und Ofenwand angeordnet ist. Die beiden Temperaturen sind kontinuierlich zu messen.

Probenvorbereitung: Die pulverförmige oder granulierte Probe ist zunächst bis zur Hälfte in den Probenbehälter einzufüllen und der Behälter ist dreimal aus circa 3 cm Höhe leicht aufzustauchen. Dann wird der Probenbehälter bis zum Rand mit der pulverförmigen oder granulierten Probe gefüllt und der Behälter ist abermals dreimal aus circa 3 cm Höhe leicht aufzustauchen. Wenn sich die Probe absetzt, ist bis zum Rand nachzufüllen. Der Probenbehälter ist mittig in den Schutzbehälter einzusetzen und der Schutzbehälter in die Mitte des Ofens zu stellen.

Prüfbedingungen: Die Ofentemperatur wird zunächst auf eine Solltemperatur von 120°C eingestellt und mindestens 20 Stunden gehalten. Die Temperatur im Inneren der Probe ist zu registrieren. Wenn die Temperatur in der Probe während der Versuchsdauer die Ofentemperatur um 60°C übersteigt, so ist das Ergebnis des Oxidationsstabilitäts-Tests positiv, da in der Probe eine Selbsterhitzung als Folge einer Oxidation eingetreten ist. In einem solchen Fall wird der Oxidationsstabilitäts-Tests mit einer neu präparierten Probe bei einer um 10°C erniedrigten Solltemperatur des Ofens erneut durchgeführt. Dies ist so lange zu wiederholen, bis der Test ein negatives Ergebnis liefert, d. h. die Temperatur im Innern der Probe während der Versuchsdauer die Ofentemperatur um 60°C nicht übersteigt, so dass keine Selbsterhitzung der Probe als Folge einer Oxidation - verbunden mit einem Temperaturanstieg von über 60°C - eintritt. Liefert der Versuch bei einer Solltemperatur des Ofens von 120°C bereits ein negatives Ergebnis, so wird der Oxidationsstabilitäts-Test mit einer neu präparierten Probe bei einer um 10°C erhöhten Solltemperatur des Ofens erneut durchgeführt. Dies ist so lange zu wiederholen, bis der Oxidationsstabilitäts-Test ein positives Ergebnis erbringt. Die maximal erreichte Solltemperatur des Ofens, bei der der Oxidationsstabilitäts-Test gerade noch ein negatives Ergebnis erbringt, also bei der die Probe stabil gegenüber einer Oxidation ist, gilt als Oxidationsstabilität/Thermostabiliät für das untersuchte Pigment. Diese Temperatur ist bei den jeweiligen Beispielen beziehungsweise in den Tabellen 3 und 4 angegeben.

### I.2 Baustoff-Farbtest

Die Prüfung der Farbwerte in Baustoffen erfolgte in Zementmörtel über die farbmetrische Messung von mit Weißzement hergestellten Prismen bei folgenden Daten:

Zement-Quarzsand-Verhältnis 1:4, Wasser-Zement-Wert 0.35, Pigmentierungshöhe 1.2 %, bezogen auf Zement, verwendeter Mischer von RK Toni Technik, Berlin, mit 51-Mischschüssel, Bauform 1551, Drehzahl 140 U/min, Ansatz: 1200 g Quarzsand 0,1 bis 1 mm, 600 g Quarzsand 1 bis 2 mm, 200 g Kalksteinmehl (< 5 % Siebrückstand auf 90 µm-Sieb), 500 g Weißzement. Die Quarzsandfraktionen und das Kalksteinmehl werden zusammen im Mischbehälter vorgelegt. Anschließend wird das Pigment zugegeben und 10 s vorgemischt (Mischer Stufe 1: langsam). Zu dieser Mischung wird nun das Wasser gegeben, wobei darauf zu achten ist, dass es in die Mitte der Mischung eingebracht wird. Nach dem Versickern wird der Zement zugesetzt und gemischt (Mischer Stufe 1: langsam). Nach 100 s Mischzeit wird eine Probe (600 g) entnommen und daraus ein Probekörper (10 x 10 x 2.5 cm) unter Druck hergestellt (Presskraft 114 kN für 2 Sekunden). Farbdatenmessung über Minolta Chromameter 310 mit 4 Messpunkten je Stein (Messgeometrie d/8°, Lichtart C/2° mit Glanzeinschluss). Die erhaltenen Mittelwerte werden verglichen mit den Werten einer Referenz- beziehungsweise Bezugsprobe (nicht beschichtetes Pigment aus Beispiel 1 für die Proben in Tabelle 3 beziehungsweise nicht beschichtetes Pigment aus Beispiel 4 für die Proben in Tabelle 4). Beurteilt werden der Gesamtfarbabstand $\Delta E_{ab}^*$ und die relative Farbstärke (Referenzprobe = 100 %) (DIN 5033, DIN 6174). Dabei berechnet sich der Gesamtfarbabstand $\Delta E_{ab}^*$ gemäß

- $\Delta E_{ab}^* = [(\Delta L^*)^2 + (\Delta a^*)^2 + (\Delta b^*)^2]^{1/2}$,

wobei die folgenden - aus dem CIELAB-System bekannt - Abkürzungen gelten

- a* entspricht der Rot-Grün-Achse mit $\Delta a^* = a^*$ (Probe) - a* (Bezug)
- b* entspricht der Gelb-Blau-Achse mit $\Delta b^* = b^*$ (Probe) - b* (Bezug)
- L* entspricht der Helligkeit mit $\Delta L^* = L^*$ (Probe) - L* (Bezug)

### I.3 Relative Farbstärke

Für die relative Farbstärke in % gelten folgende Gleichungen:

$$\text{Relative Farbstärke in \%} = \frac{(K/S)_{Probe}}{(K/S)_{Bezug}} \cdot 100$$

$$K/S = \frac{(1-\beta^*)^2}{2 \cdot \beta^*}$$

$$\beta^* = \frac{Y/100 - r_0}{1 - r_0 - r_2 \cdot (1 - Y/100)},$$

wobei $r_0$ = 0,04 und $r_2$ = 0,6 und Y der Normfarbwert (Helligkeit) ist.
Die Berechnung erfolgt in Anlehnung an DIN 53 234.

### I.4 Restfeuchte

Die Restfeuchte wurde durch schonende Trocknung des (beschichteten) Pigments bis zur Gewichtskonstanz bestimmt.

### I.5 Erstarrungsverhalten

Das Erstarrungsverhalten wurde in Anlehnung an DIN EN 196-3 bestimmt. Dabei wird der Erstarrungsbeginn und das Erstarrungsende eines Zementleims mit und ohne Pigmentierung mit einander verglichen, wobei die Abweichungen nicht größer sein dürfen als in der DIN EN 12878 vorgegeben.

### II. Beispiel 1 (Vergleichsbeispiel ohne Beschichtungssubstanz)

Ein Eisenoxidschwarz-Pigment, hergestellt nach dem Laux-Verfahren, mit einer BET von 14.8 $m^2/g$ und einem FeO-Gehalt von 23.7% wurde nach Abtrennung des Anilins filtriert, salzfrei gewaschen, über einen Sprühtrockner mit Sprühscheibe getrocknet und über eine Bauermeistermühle mit 1 mm Siebeinsatz gemahlen. Das erhaltene Pigment wurde dem Oxidationsstabilitäts-Test und weiteren Abtestungen unterzogen. Die Ergebnisse sind in Tabelle 3 zusammengefasst.

### III. Beispiel 2 (Vergleichsbeispiele, hergestellt nach dem Stand der Technik)

Das getrocknete Eisenoxidschwarz-Pigment aus Beispiel 1 wurde in einem Mischer mit 1.5 Gew.-% pulverisierter *ortho*-Borsäure versetzt, 15 Minuten gemischt und anschließend über eine Bauermeistermühle mit 1 mm Siebeinsatz gemahlen. Das erhaltene beschichtete Pigment wurde dem Oxidationsstabilitäts-Test und weiteren Abtestungen unterzogen. Die Ergebnisse sind in Tabelle 3 zusammengefasst.

### IV. Beispiel 3

Das getrocknete Eisenoxidschwarz-Pigment aus Beispiel 1 wurde in einem Mischer jeweils mit 1.5 Gew.-% von verschiedenen pulverisierten organischen Verbindungen der allgemeinen Formel (I) versetzt, 15 Minuten gemischt und anschließend über eine Bauermeistermühle mit 1 mm Siebeinsatz gemahlen. Die jeweils erhaltenen beschichteten Pigmente wurden dem Oxidationsstabilitäts-Test und weiteren Abtestungen unterzogen. Die Ergebnisse sind in Tabelle 3 zusammengefasst.

**V. Beispiel 4 (Vergleichsbeispiel ohne Beschichtungssubstanz)**

Ein Eisenoxidschwarz-Pigment, hergestellt nach dem Laux-Verfahren wurde nach der Synthese und nach Abtrennung des Anilins filtriert und salzfrei gewaschen. Der Filterkuchen besaß einen Feststoffgehalt von 64.0 Gew.-% und wurde ohne irgendwelche Zusätze getrocknet. Der erhaltene Feststoff wurde über einen Schroter mit 3 mm-Maschenweite vorzerkleinert und anschließend über eine Bauermeistermühle mit 1 mm Siebeinsatz gemahlen. Das erhaltene Pigment wies eine BET von 22.2 $m^2/g$ und einen FeO-Gehalt von 18.8% auf. Es wurde dem Oxidationsstabilitäts-Test und weiteren Abtestungen unterzogen. Die Ergebnisse sind in Tabelle 4 zusammengefasst.

**VI. Beispiel 5 (Vergleichsbeispiele, hergestellt nach dem Stand der Technik)**

Jeweils 7.8 kg des gewaschenen Eisenoxidschwarz-Filterkuchens mit 64.0 Gew.-% Feststoffgehalt aus Beispiel 4 wurden mit 3.5 kg Wasser zu einer Paste mit 44.2 Gew.-% Feststoffgehalt angemaischt. Die Paste wurde mit 0.75 Gew.-% pulverisierter *ortho*-Borsäure (Beispiel 5a) beziehungsweise 0.75 Gew.-% einer 1:1-Pulvermischung aus Benzoesäure und *ortho*-Borsäure (Beispiel 5b) versetzt, 15 Minuten gerührt, getrocknet, über einen Schroter mit 3 mm-Maschenweite vorzerkleinert und anschließend über eine Bauermeistermühle mit 1 mm-Siebeinsatz gemahlen. Die jeweils erhaltenen Pigmente wurden dem Oxidationsstabilitäts-Test und weiteren Abtestungen unterzogen. Die Ergebnisse sind in Tabelle 4 zusammengefasst.

**VII. Beispiel 6** (nicht erfindungsgemäß)

Jeweils 7.8 kg des gewaschenen Eisenoxidschwarz-Filterkuchens mit 64.0 Gew.-% Feststoffgehalt aus Beispiel 4 wurden mit 3.5 kg Wasser zu einer Paste mit 44.2 Gew.-% Feststoffgehalt angemaischt. Die Paste wurde mit 0.75 Gew.-% n-Butyldimethylchlorsilan (Beispiel 6a) beziehungsweise 0.75 Gew.-% Phenyltrichlorsilan (Beispiel 6b) beziehungsweise 0.75 Gew.-% Diphenylsilandiol (Beispiel 6c) versetzt, 15 Minuten gerührt, getrocknet, über einen Schroter mit 3 mm-Maschenweite vorzerkleinert und anschließend über eine Bauermeistermühle mit 1 mm-Siebeinsatz gemahlen. Die jeweils erhaltenen Pigmente wurden dem Oxidationsstabilitäts-Test und weiteren Abtestungen unterzogen. Die Ergebnisse sind in Tabelle 4 zusammengefasst.

**VIII. Beispiel 7 (Vergleichsbeispiel ohne Beschichtungssubstanz)**

Ein pulverförmiges Eisenoxidschwarz-Pigment mit einer BET von 7.5 $m^2/g$ und einen FeO-Gehalt von 24.3%, welches nach dem Fällungsverfahren aus Eisen(II)-sulfat hergestellt worden war, besaß eine Restfeuchte von 0.3 % und ergab im Oxidationsstabilitäts-Test eine Oxidationsstabilität von 110°C.

**IX. Beispiel 8** (nicht erfindungsgemäß)

Das pulverförmige Eisenoxidschwarz-Pigment aus Beispiel 7 wurde in Wasser zu einer Paste mit 62.5 Gew.-% Feststoffgehalt angemaischt. Die Paste wurde mit 1.5 Gew.-% Triethoxy(2,4,4-trimethylpentyl)silan versetzt, 15 Minuten gerührt und anschließend getrocknet. Der erhaltene Feststoff wurde über einen Schroter mit 3 mm-Maschenweite vorzerkleinert und über eine Bauermeistermühle mit 1 mm Siebeinsatz gemahlen. Das erhaltene Pigment besaß eine Restfeuchte von 0.3 % und ergab im Oxidationsstabilitäts-Test eine Oxidationsstabilität von 130°C.

**Tabelle 3**

| Beispiel | Zugesetzte organische Verbindung gemäß der allgemeinen Formel (I) | Erklärung zur organischen Verbindung gemäß der allgemeinen Formel (I) | Oxidationsstabilität [°C] | Restfeuchte [%] | Relative Farbstärke [%] | Gesamtfarbabstand $\Delta E_{ab}^*$ | Erstarrungsverhalten |
|---|---|---|---|---|---|---|---|
| 1 | keine | -- | 120 | 1.0 | 100 (Bezug) | 0.0 (Bezug) | erfüllt |
| 2 | 1.5 Gew.-% *ortho*-Borsäure | -- | 140 | 1.6 | 99 | 0.1 | erfüllt |
| 3a | 1.5 Gew.-% Benzolsulfonsäure, Natriumsalz | X=S; a=2; $R^3$ = OM mit M = Na; b = 1; c = 0; $R^1$ = Phenyl; d = 1 | 140 | 0.7 | 99 | 0.1 | erfüllt |
| 3b | 1.5 Gew.-% p-Toluolsulfonsäure | X = S; a = 2; $R^3$ = OM mit M = H; b = 1; c = 0; $R^1$ = p-Phenylen; d = 1 | 140 | 0.8 | 103 | 0.3 | erfüllt |
| 3c | 1.5 Gew.-% Phenylphosphonsäure | X = P; a = 1; $R^3$ = OM mit M = H; b = 2; c = 0; $R^1$ = Phenyl; d = 1 | 140 | 0.9 | 102 | 0.2 | erfüllt |
| 3d | 1.5 Gew.-% p-Toluolsulfonsäureamid | X = S; a = 2; $R^3$ = $NH_2$; b = 1; c = 0; $R^1$ = p-Phenylen; d = 1 | 140 | 0.9 | 97 | 0.3 | erfüllt |

**Tabelle 4**

| Beispiel | Zugesetzte organische Verbindung gemäß der allgemeinen Formel (I) | Erklärung zur organischen Verbindung gemäß der allgemeinen Formel (I) | Oxidations-stabilität [°C] | Restfeuchte [%] | Relative Farbstärke [%] | Gesamtfarbabstand $\Delta E_{ab}^*$ | Erstarrungs-verhalten |
|---|---|---|---|---|---|---|---|
| **4** | keine | -- | 100 | 0.6 | 100 (Bezug) | 0.0 (Bezug) | nicht geprüft |
| **5a** | 0.75 Gew.-% *ortho*-Borsäure | -- | 110 | 0.6 | nicht geprüft | nicht geprüft | nicht geprüft |
| **5b** | 0.75 Gew.-% 1:1 Mischung Benzoesäure / *ortho*-Borsäure | -- | 110 | 0.5 | nicht geprüft | nicht geprüft | nicht geprüft |
| **6a** | 0.75 Gew.-% n-Butyldimethylchlorsilan | X = Si; a = 0; $R^3$ = Cl; b = 1; c = 0; $R^1$ = n-butyl und methyl; d = 3 | 110 | 0.6 | 106 | 0.5 | nicht geprüft |
| **6b** | 0.75 Gew.-% Phenyltrichlorsilan | X = Si; a = 0; $R^3$ = Cl; b = 3; c = 0; $R^1$ = Phenyl; d = 1 | 110 | 0.6 | 103 | 0.2 | nicht geprüft |
| **6c** | 0.75 Gew.-% Diphenylsilandiol | X = Si; a = 0; $R^3$ = OM mit M = H; b = 2; c = 0; $R^1$ = Phenyl; d = 2 | 110 | 0.5 | 110 | 0.8 | nicht geprüft |

**Patentansprüche**

1. Oxidationsstabile Eisenoxidpigmente mit einem Eisen(II)-Gehalt von mindestens 5 Gew.-%, gerechnet als FeO, die eine organische Beschichtung aufweisen, **dadurch gekennzeichnet, daß** die Beschichtung aus einer oder mehreren organischen Verbindungen der allgemeinen Formel (I)

$$XO_aR^3_b(OR^2)_cR^1_d$$

besteht, wobei

X für P oder S steht und
$R^3$ für Cl, $NH_2$, oder OM steht,
wobei M Wasserstoff, eine Ammoniumverbindung, oder ein Alkalimetall ist, und
$R^2$ und $R^1$ jeweils für einen gesättigten linearen oder verzweigten aliphatischen Rest mit 1 bis 15 C-Atomen, oder für einen aromatischen Rest mit 6 bis 14 C-Atomen, welcher sich vom Benzol, Naphthalin oder Antracen ableitet und welcher gegebenenfalls ein- oder mehrfach mit Halogen und/oder $NH_2$ und/oder OH und/oder NHR und/oder $NR_2$ und/oder OR und/oder R substituiert ist steht,
wobei R ein gesättigter oder ungesättigter linearer oder verzweigter aliphatischer Rest mit jeweils 1 bis 10 C-Atomen oder ein gegebenenfalls substituierter alicyclischer oder aromatischer Rest mit jeweils 6 bis 10 C-Atomen ist, und

wobei,
wenn X für P steht, a = 1, b = 2, c = 0 und d = 1 ist, oder
wenn X für S steht, a = 2, b = 1, c = 0 und d = 1 ist, so dass

$$a + b + c + d = 4$$

ist und die Eisenoxidpigmente eine Oxidationsstabilität gemäß dem Oxidationsstabilitäts-Test von $\geq$ 10°C gegenüber dem nicht beschichteten Eisenoxidpigment aufweisen.

2. Eisenoxidpigmente gemäß Anspruch 1, **dadurch gekennzeichnet, dass** die Eisenoxidpigmente eine Oxidationsstabilität von $\geq$ 20°C gegenüber dem nicht beschichteten Eisenoxidpigment aufweisen.

3. Eisenoxidpigmente gemäß Anspruch 1 oder 2, **dadurch gekennzeichnet, dass** die einer oder mehreren organischen Verbindungen der allgemeinen Formel (I) zusätzlich noch Wasser enthalten.

4. Eisenoxidpigmente gemäß einem oder mehreren der Ansprüche 1 bis 3, **dadurch gekennzeichnet, dass** die eine oder mehreren organischen Verbindungen der allgemeinen Formel (I) ausgewählt sind aus Benzolsulfonsäure, Benzolsulfonsäureamid, Benzolsulfonsäure-Alkalimetallsalz, p-Toluolsulfonsäure, p-Toluolsulfonsäureamid oder p-Toluolsulfonsäureamid-Alkalimetallsalz..

5. Eisenoxidpigmente gemäß einem oder mehreren der Ansprüche 1 bis 4, **dadurch gekennzeichnet, dass** die eine oder mehreren organischen Verbindungen der allgemeinen Formel (I) in einer Menge von 0.1 bis 10 Gew.-%, insbesondere von 0.2 bis 3 Gew.-%, im beschichteten Pigment vorliegen.

6. Eisenoxidpigmente gemäß einem oder mehreren der Ansprüche 1 bis 5, **dadurch gekennzeichnet, dass** die Eisenoxidpigmente einen Restfeuchtegehalt von < 5 Gew.-%, insbesondere von < 3.5 Gew.-% aufweisen.

7. Verfahren zur Herstellung von Eisenoxidpigmenten gemäß einem oder mehreren der Ansprüche 1 bis 6, **dadurch gekennzeichnet, dass** Eisenoxidpigmente mit einem Fe(II)-Gehalt von mindestens 5 Gew.-%, gerechnet als FeO, entweder in trockener Form, als Paste oder als Suspension, mit mindestens einer Verbindung der allgemeinen Formel (I) gemischt und die Mischung gegebenenfalls getrocknet und/oder gemahlen wird.

8. Verfahren zur Herstellung von Eisenoxidpigmenten gemäß Anspruch 7, **dadurch gekennzeichnet, dass** die Suspension eine Suspension oder Paste aus dem Pigmentherstellungsprozess ist.

9. Verfahren zur Herstellung von Eisenoxidpigmenten gemäß Anspruch 7, **dadurch gekennzeichnet, dass** die Suspension eine erneute Dispersion von agglomerierten Partikeln ist.

10. Verfahren gemäß einem der Ansprüche 7 bis 9, **dadurch gekennzeichnet, dass** die Eisenoxidpigmente abschließend einer Temperaturbehandlung bei 200 °C bis 800 °C in einer nicht- oder schwach oxidierenden Atmosphäre ausgesetzt werden.

11. Verwendung der Eisenoxidpigmente gemäß einem oder mehreren der Ansprüche 1 bis 6 und der nach dem Verfahren gemäß der Ansprüche 7 bis 10 hergestellten Eisenoxidpigmente zur Einfärbung von kalk- und/oder zementgebundenen Baustoffen, zur Einfärbung von Kunststoffen, Lacken, Dispersionsfarben und zur Herstellung von magnetischen Aufzeichnungsträgern und Tonern.

12. Verwendung gemäß Anspruch 11, **dadurch gekennzeichnet, dass** die kalk- und/oder zementgebundenen Baustoffe Beton, Zementmörtel, Putz und/oder Kalksandstein sind.

## Claims

1. Oxidation-stable iron oxide pigments having an iron(II) content of at least 5% by weight, calculated as FeO, and having an organic coating, **characterized in that** the coating is composed of one or more organic compounds of the general formula (I)

$$XO_aR^3_b(OR^2)_cR^1_d$$

where

X is P or S and
$R^3$ is Cl, $NH_2$, or OM, M being hydrogen, an ammonium compound, or an alkali metal, and

each of

$R^2$ and $R^1$ is a saturated linear or branched aliphatic radical having 1 to 15 carbon atoms, or is an aromatic radical having 6 to 14 carbon atoms which is derived from benzene, naphthalene or anthracene and which is optionally substituted one or more times by halogen and/or $NH_2$ and/or OH and/or NHR and/or $NR_2$ and/or OR and/or R, R being a saturated or unsaturated linear or branched aliphatic radical having in each case 1 to 10 carbon atoms or an optionally substituted alicyclic or aromatic radical having in each case 6 to 10 carbon atoms, and
where,
if X is P, a = 1, b = 2, c = 0 and d = 1, or
if X is S, a = 2, b = 1, c = 0 and d = 1,
so that

$$a + b + c + d = 4$$

and the iron oxide pigments have an oxidation stability in the oxidation stability test of ≥ 10°C as compared with the uncoated iron oxide pigment.

2. Iron oxide pigments according to Claim 1, **characterized in that** the iron oxide pigments have an oxidation stability of ≥ 20°C as compared with the uncoated iron oxide pigment.

3. Iron oxide pigments according to Claim 1 or 2, **characterized in that** the one or more organic compounds of the general formula (I) additionally contain water as well.

4. Iron oxide pigments according to one or more of Claims 1 to 3, **characterized in that** the one or more organic compounds of the general formula (I) are selected from benzenesulphonic acid, benzenesulphonic acid amide, benzenesulphonic acid alkali metal salt, p-toluenesulphonic acid, p-toluenesulphonic acid amide or p-toluenesulphonic acid amide alkali metal salt.

**5.** Iron oxide pigments according to one or more of Claims 1 to 4, **characterized in that** the one or more organic compounds of the general formula (I) are present in an amount of 0.1% to 10% by weight, in particular of 0.2% to 3% by weight, in the coated pigment.

**6.** Iron oxide pigments according to one or more of Claims 1 to 5, **characterized in that** the iron oxide pigments have a residual moisture content of < 5% by weight, in particular of < 3.5% by weight.

**7.** Process for preparing iron oxide pigments according to one or more of Claims 1 to 6, **characterized in that** iron oxide pigments having an Fe(II) content of at least 5% by weight, calculated as FeO, either in dry form, as a paste or as a suspension, are mixed with at least one compound of the general formula (I) and the mixure is optionally dried and/or ground.

**8.** Process for preparing iron oxide pigments according to Claim 7, **characterized in that** the suspension is a suspension or paste from the pigment production operation.

**9.** Process for preparing iron oxide pigments according to Claim 7, **characterized in that** the suspension is a renewed dispersion of agglomerated particles.

**10.** Process according to one of Claims 7 to 9, **characterized in that** the iron oxide pigments are exposed concludingly to a temperature treatment at 200°C to 800°C in a non-oxidizing or weakly oxidizing atmosphere.

**11.** Use of the iron oxide pigments according to one or more of Claims 1 to 6 and of the iron oxide pigments prepared by the process according to Claims 7 to 10 for colouring lime- and/or cement-bound building materials, for colouring plastics, varnishes, emulsion paints and for producing magnetic recording media and toners.

**12.** Use according to Claim 11, **characterized in that** the lime- and/or cement-bound building materials are concrete, cement mortar, plaster and/or sand-lime brick.

**Revendications**

**1.** Pigments d'oxyde de fer stables à l'oxydation, ayant une teneur en fer(II) d'au moins 5 % en poids, calculée en tant que FeO, qui comprennent un revêtement organique, **caractérisés en ce que** le revêtement est constitué par un ou plusieurs composés organiques de formule générale (I)

$$XO_aR^3_b(OR^2)_cR^1_d$$

dans laquelle

X représente P ou S et
$R^3$ représente Cl, $NH_2$ ou OM,
M étant l'hydrogène, un composé d'ammonium ou un métal alcalin, et
$R^2$ et $R^1$ représentent chacun un radical aliphatique saturé linéaire ou ramifié de 1 à 15 atomes C, ou un radical aromatique de 6 à 14 atomes C, qui dérive de benzène, de naphtaline ou d'anthracène, et qui est éventuellement substitué une ou plusieurs fois avec halogène et/ou $NH_2$ et/ou OH et/ou NHR et/ou $NR_2$ et/ou OR et/ou R,
R étant un radical aliphatique saturé ou insaturé, linéaire ou ramifié, contenant à chaque fois 1 à 10 atomes C, ou un radical alicyclique ou aromatique éventuellement substitué contenant à chaque fois 6 à 10 atomes C, et dans laquelle
lorsque X représente P, a = 1, b = 2, c = 0 et d = 1, ou
lorsque X représente S, a = 2, b = 1, c = 0 et d = 1, de sorte que

$$a + b + c + d = 4$$

et les pigments d'oxyde de fer présentent une stabilité à l'oxydation selon le test de stabilité à l'oxydation de ≥

10 °C par rapport au pigment d'oxyde de fer non revêtu.

2. Pigments d'oxyde de fer selon la revendication 1, **caractérisés en ce que** les pigments d'oxyde de fer présentent une stabilité à l'oxydation de ≥ 20 °C par rapport au pigment d'oxyde de fer non revêtu.

3. Pigments d'oxyde de fer selon la revendication 1 ou 2, **caractérisés en ce que** le ou les composés organiques de formule générale (I) contiennent en outre de l'eau.

4. Pigments d'oxyde de fer selon une ou plusieurs des revendications 1 à 3, **caractérisés en ce que** le ou les composés organiques de formule générale (I) sont choisis parmi l'acide benzènesulfonique, un amide de l'acide benzènesulfonique, un sel de métal alcalin de l'acide benzènesulfonique, l'acide p-toluènesulfonique, un amide de l'acide p-toluènesulfonique ou un sel de métal alcalin d'un amide de l'acide p-toluènesulfonique.

5. Pigments d'oxyde de fer selon une ou plusieurs des revendications 1 à 4, **caractérisés en ce que** le ou les composés organiques de formule générale (I) sont présents en une quantité de 0,1 à 10 % en poids, notamment de 0,2 à 3 % en poids, dans le pigment revêtu.

6. Pigments d'oxyde de fer selon une ou plusieurs des revendications 1 à 5, **caractérisés en ce que** les pigments d'oxyde de fer présentent une teneur en humidité résiduelle < 5 % en poids, notamment < 3,5 % en poids.

7. Procédé de fabrication de pigments d'oxyde de fer selon une ou plusieurs des revendications 1 à 6, **caractérisé en ce que** des pigments d'oxyde de fer ayant une teneur en Fe (II) d' au moins 5 % en poids, calculée en tant que FeO, sont mélangés sous forme sèche, sous la forme d'une pâte ou sous la forme d'une suspension avec au moins un composé de formule générale (I), et le mélange est éventuellement séché et/ou broyé.

8. Procédé de fabrication de pigments d'oxyde de fer selon la revendication 7, **caractérisé en ce que** la suspension est une suspension ou une pâte issue du procédé de fabrication du pigment.

9. Procédé de fabrication de pigments d'oxyde de fer selon la revendication 7, **caractérisé en ce que** la suspension est une nouvelle dispersion de particules agglomérées.

10. Procédé selon l'une quelconque des revendications 7 à 9, **caractérisé en ce que** les pigments d'oxyde de fer sont exposés en conclusion à un traitement thermique à une température de 200 °C à 800 °C dans une atmosphère non ou faiblement oxydante.

11. Utilisation des pigments d'oxyde de fer selon une ou plusieurs des revendications 1 à 6 et des pigments d'oxyde de fer fabriqués par le procédé selon les revendications 7 à 10 pour la coloration de matériaux de construction liés par de la chaux et/ou du ciment, pour la coloration de plastiques, de vernis, de peintures en dispersion, et pour la fabrication de supports d'enregistrement magnétiques et de toners.

12. Utilisation selon la revendication 11, **caractérisée en ce que** les matériaux de construction liés par de la chaux et/ou du ciment sont du béton, du mortier de ciment, du crépi et/ou des briques silico-calcaires.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2744598 A1
- DE 4139052 A1
- DE 3726048 A1
- DE 3211327 A1
- DE 4322886 A1


### In der Beschreibung aufgeführte Nicht-Patentliteratur


- Classification and Labeling. *Protokoll der Sitzung des EU Technical Committee,* 08. September 2005
- Ullmann's Encyclopedia of Industrial Chemistry. VCH Verlagsgesellschaft mbH, 1992, vol. A20, 297
- Ullmann's Encyclopedia of Industrial Chemistry. VCH Verlagsgesellschaft mbH, 1992, vol. A20, 330